# EUROPEAN PATENT APPLICATION

(11) **EP 4 553 762 A1**
(43) Date of publication of application: **14.05.2025**
(21) Application number: 23208726.2
(22) Date of filing: 09.11.2023
(51) Int. Cl.: G06T 7/00

(54) **LOCK-IN AVERAGING FOR SEMICONDUCTOR DIAGNOSTICS**

(71) Applicant: Imec VZW, 3001 Leuven (BE); Katholieke Universiteit Leuven KU Leuven Research & Development, 3000 Leuven (BE)
(72) Inventor: JACOBS, Kristof J.P., 2500 Lier (BE); MANKALA RAMAKRISHNA SHARMA, Anjanashree, 3001 Heverlee (BE)
(74) Representative: Winger

(57) **Abstract**

A method (100) for localizing one or more defects in a semiconductor device. The method comprises: switching (110) the semiconductor device on and off at a first frequency; meanwhile switching (120) an irradiating device on and off at a second frequency, meanwhile acquiring (130) images of the semiconductor device; lock-in averaging (140A) the acquired images with a first reference signal having the first frequency and a first phase to obtain amplitudes indicative of temperatures at a surface of the semiconductor device and/or phase signals indicative of a depth location of the one or more defects in the semiconductor device; lock-in averaging (140B) of the acquired images with a second reference signal having the second frequency and a second phase to obtain a topography of the surface of the semiconductor device, wherein the first frequency is different from the second frequency and/or the first phase is different from the second phase.

## Description

### Field of the invention

The invention relates to the field of semiconductor diagnostics. More specifically it relates to a method or device which uses lock-in averaging for localizing defects in a semiconductor device.

### Background of the invention

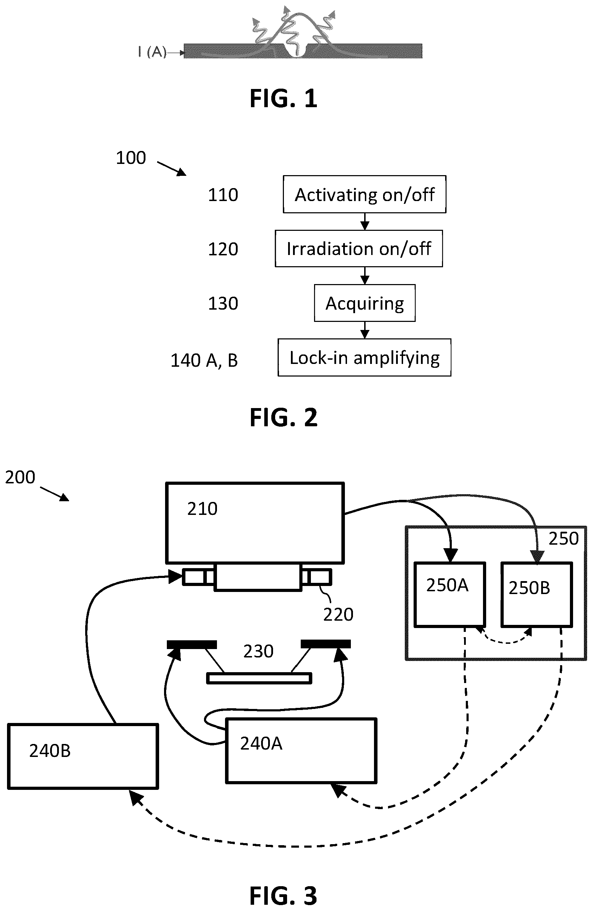

When a defect is present in a semiconductor device and the semiconductor device is operational (i.e. it is turned on) this will typically lead to an increased temperature around the defect in comparison with a device which does not have this defect. This is illustrated in FIG. 1 which shows the defect at the center of the semiconductor device and the thermal radiation resulting from this defect.

Defects which need to be detected may for example be shunt sites in a solar cell or shorts in an electronic circuit.

Among the various techniques used for failure analysis of advanced semiconductor technologies, lock-in thermography (LIT) is one of the reliable methods for identifying sub-surface defects. It is widely used for the 3D localization of the defect in integrated circuit packages ([C. Schmidt, F. Altmann, C. Grosse, A. Lindner, and V. Gottschalk, "Lock-In-Thermography for 3-Dimensional Localization of Electrical Defects inside Complex Packaged Devices," presented at the ISTFA 2008, ASM International, Nov. 2008, pp. 102-107. doi: 10.31399/asm.cp.istfa2008p0102]). The infrared images or the thermograms obtained from this technique should have good resolution and contrast to pinpoint the defect efficiently. The quality of the thermograms depends on the sensitivity of the camera, detector technology, objective lenses, and the strength of the infrared signal radiated from the object. High-performance cameras needed for LIT are expensive and are not extensively commercialized ([M. Razani, A. Parkhimchyk, and N. Tabatabaei, "Lock-in thermography using a cellphone attachment infrared camera," AIP Advances, vol. 8, no. 3, p. 035305, Mar. 2018, doi: 10.1063/1.5021601]). Several methods have been proposed in the literature to improve thermogram contrast but most of them are based on histogram modification. They are useful for enhancing the appearance of the thermograms but can sometimes lead to the suppression of the finer details of the image.

There is, therefore, a need for methods and devices increase the contrast of images in a semiconductor device, while assisting thermal enhancement of the LIT hotspot signal from the defect.

### Summary of the invention

It is an object of embodiments of the present invention to provide a good method and a good device for localizing a defect in a semiconductor device wherein the defect results in an increased temperature at the location of the defect.

The above objective is accomplished by a method and device according to the present invention.

In a first aspect embodiments of the present invention relate to a method for localizing one or more defects in a semiconductor device. The method comprising:
- switching the semiconductor device on and off at a first frequency,
- meanwhile switching an irradiating device, for irradiating the semiconductor device, on and off at a second frequency,
- and meanwhile acquiring images of the semiconductor device using a camera.

The method, furthermore, comprises:
- lock-in averaging the acquired images with a first reference signal having the first frequency and a first phase to obtain amplitudes indicative of temperatures at a surface of the semiconductor device and/or phase signals indicative of a depth location of the one or more defects in the semiconductor device which are induced by switching the semiconductor device on and off,
- lock-in averaging of the acquired images with a second reference signal having the second frequency and a second phase to obtain a topography of the surface of the semiconductor device.

In all embodiments of the present invention the first frequency is different from the second frequency and/or the first phase is different from the second phase.

In a method according to embodiments of the present invention the irradiation may be done using a plurality of light emitting diodes (LEDs). They may transmit IRradiation. The irradiation of the semiconductor device may also be done using a laser or it may be done using a heater. In a method according to embodiments of the present invention an additional irradiation device may be switched on and off at an additional frequency, and an additional topography image may be acquired by lock-in averaging with a reference signal having the additional frequency and an additional phase. The method, furthermore, may comprise merging the topographic images.

It is an advantage of embodiments of the present invention that simultaneously an image with a good topographical contrast as well as an amplitude image and/or phase signals for localizing a defect can be obtained. The resulting images from these two measurements may give a hotspot amplitude of a defect and a lock-in thermogram if the irradiation causes heating or a lock-in image if the irradiation is through illumination (e.g. infrared light) of the topography.

It is an advantage of embodiments of the present invention that the temperature of semiconductor device can be reduced due to periodic heating.

It is an advantage of embodiments of the present invention that the contrast of the topographical thermograms is improved. Since the topography obtained from this method is from a lock-in measurement, the data is averaged over several cycles, and hence is less sensitive to the input noise. Integrated topography images obtained from classical lock-in thermography can sometimes result in blurring due to crosstalk between consecutive frames.

In embodiments of the present invention the first frequency is equal to the second frequency and the first phase is shifted over 90° with respect to the second phase.

In embodiments of the present invention the first frequency is different from the second frequency.

In embodiments of the present invention the method comprises localizing one or more defects on one or more locations by determining where the obtained amplitudes are larger than a predefined threshold.

In a second aspect embodiments of the present invention relate to a system for localizing one or more defects in a semiconductor device. The system comprises:
- a first signal generator for powering the semiconductor device on and off at a first frequency,
- a second signal generator and an irradiating device for irradiating the semiconductor device wherein the second signal generator (140B) is configured for switching on and off the irradiating device at a second frequency,
- a camera configured for acquiring images of the semiconductor device. In embodiments of the present invention the camera is configured for acquiring the images at a frame rate which is at least twice the highest frequency of the signal generators.

The system, furthermore, comprises:
- a first lock-in device configured for lock-in averaging the acquired images with a first reference signal having the first frequency and a first phase to obtain amplitudes indicative of temperatures at a surface of the semiconductor device and/or phase signals indicative of a depth location of the one or more defects in the semiconductor device which are induced by powering the semiconductor device on and off,
- a second lock-in device configured for lock-in averaging the acquired images with a second reference signal having the second frequency and a second phase to obtain a topography of the surface of the semiconductor device.

In all embodiments of the present invention wherein the first frequency is different from the second frequency and/or the first phase is different from the second phase.

In embodiments of the present invention the camera is an infrared camera.

In embodiments of the first lock-in device and/or the second lock-in device are implemented digitally. They may for example be implemented by a software algorithm on a processing device.

Alternatively, in embodiments of the present invention the first lock-in device and/or the second lock-in device comprise analog circuits comprising a mixer for mixing a pixel signal of the acquired images with the respective first or second reference signal followed by a low pass filter.

In embodiments of the present invention the irradiating device is a light source comprising a plurality of LEDs or lasers.

In embodiments of the present invention the LEDs or lasers are positioned in a ring around the camera.

In embodiments of the present invention one of the LEDs or lasers is positioned substantially in a center of the ring.

In embodiments of the present invention the irradiating device is a heating device.

In embodiments of the present invention the system may comprise at least one additional signal generator and at least one additional irradiation device for irradiating the semiconductor device. The at least one additional signal generator is configured for switching on and off the at least one additional irradiating device with at least one additional frequency different from the first and the second frequency.

For each additional signal generator the system comprises at least one additional lock-in device configured for lock-in averaging the acquired images with the at least one additional reference signal having the at least one additional frequency to obtain a topography of the surface of the semiconductor device. The additional lock-in device may be implemented digitally. It may for example be implemented by a software algorithm on a processing device.

In embodiments of the present invention the additional irradiation devices may allow multimodal imaging by illuminating the semiconductor device with different frequencies and/or by illuminating the semiconductor device and heating the semiconductor device at different frequencies.

In embodiments of the present invention the system may comprise a processing device programmed for fusing images from the different lock-in devices.

In embodiments of the present invention the processing device may additionally be programmed for localizing one or more defects on one or more locations in the semiconductor device by determining where the obtained amplitudes are larger than a predefined threshold.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates an increased temperature around a defect in a semiconductor device.
FIG. 2 shows a flow chart of an exemplary method in accordance with embodiments of the present invention.
FIG. 3 shows a schematic drawing of an exemplary flow chart in accordance with embodiments of the present invention.
FIG. 4 shows a camera and a semiconductor device of a system in accordance with embodiments of the present invention.
FIG. 5 schematically shows the different signals applied during a method in accordance with embodiments of the present invention.
FIG. 6 shows the topography and amplitude images obtained using a conventional lock-in thermography method.
FIG. 7 shows the topography and amplitude images obtained using a method or device in accordance with embodiments of the present invention.
FIG. 8 illustrates multimodal imaging using a plurality of irradiating devices which switched on and off at different frequencies in accordance with embodiments of the present invention.
FIG. 9 illustrates multimodal imaging using different types of irradiating devices in accordance with embodiments of the present invention.
FIG. 10 shows an irradiating device mounted on a lens of a camera in front of a semiconductor device for use in a method or system in accordance with embodiments of the present invention.
FIG. 11 shows the bottom view of the lens and irradiating device of FIG. 10.
FIG. 12 shows an irradiating device for heating the semiconductor device for use in a method or system in accordance with embodiments of the present invention.
FIG. 13 illustrates images obtained using a method in accordance with embodiments of the present invention wherein the first frequency is equal to the second frequency and the on and off switching of the semiconductor device and the on and off switching of the irradiating device has a phase difference of 90°.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect embodiments of the present invention relate to a method for localizing one or more defects in a semiconductor device. A method in accordance with embodiments of the present invention may for example be used for detecting shunt sites in a solar cell or for detecting a short in an electronic circuit. The method is configured to localize defects which result in an increased temperature around the defect when the device is powered (also referred to as switched on).

The method steps of an exemplary method 100 in accordance with embodiments of the present invention is illustrated in FIG. 2.

The method 100 comprises switching 110 the semiconductor device on and off at a first frequency and meanwhile switching 120 an irradiating device, for irradiating the semiconductor device, on and off at a second frequency.

While the semiconductor device is switched on and off at the first frequency and the irradiation device is switched on and off at the second frequency, images of the semiconductor device are acquired using a camera. In embodiments of the present invention the images are acquired at a frame rate which is at least twice the first frequency or the second frequency. In embodiments of the present invention the images comprise a plurality of pixels and for each pixel a pixel value is stored. In embodiments of the present invention the pixel value represents the intensity of the signal.

The method comprises lock-in averaging 140A the acquired images with a first reference signal having the first frequency and a first phase to obtain, per pixel of the image, an amplitude indicative of a temperature of the pixel at a surface of the semiconductor device.

In embodiments of the present invention this may for example be achieved by multiplying weighting factors such as the values of a sine, which has the first frequency and the first phase, with the pixel value of the consecutive images. The results are summed and low pass filtering may be applied to obtain a resulting image. The first phase is selected such that the obtained amplitudes of the pixels of the resulting image are indicative of the temperature of the corresponding pixels at the surface of the semiconductor device.

In embodiments of the present invention phase signals may be obtained by lock-in averaging the acquired images with the first reference signal. These phase signals are indicative of the depth location of the one or more defects in the semiconductor device. In embodiments of the present invention this may for example be achieved by multiplying the values of a cosine, which has the first frequency and the first phase, with the pixel value of the subsequent images. The results are summed and low pass filtering may be applied to obtain a resulting image of which the pixel values are indicative of a depth location of the one or more defects in the semiconductor device.

The method comprises lock-in averaging 140B the acquired images with a second reference signal having the second frequency and the second phase to obtain a topography of the surface of the semiconductor device.

In the present invention the first frequency is different from the second frequency and/or the first phase is different from the second phase.

The obtained pixel values may be amplified in the lock-in averaging step. In that case this step may also be referred to as the lock-in amplification step.

In a second aspect embodiments of the present invention relate to a system for localizing one or more defects in a semiconductor device. A schematic drawing of an exemplary system in accordance with embodiments of the present invention is shown in FIG. 3.

The system 200 comprises a first signal generator 240A for powering the semiconductor on and off at a first frequency. In the example illustrated in FIG. 3 this first signal generator is connected to needle probers. These needle probers are contacting the probe pads of the semiconductor device.

The system 200, furthermore, comprises a second signal generator 240B and an irradiating device 220 for irradiating the semiconductor device 230 wherein the second signal generator 140B is configured for switching on and off the irradiating device at a second frequency. The irradiating device may be configured for illuminating (e.g. with IR radiation) the semiconductor device or for heating the semiconductor device (e.g. with a laser or PCB heater).

The system 200, furthermore, comprises a camera 210 configured for acquiring 130 images of the semiconductor device.

The system 200, furthermore, comprises a first lock-in device 250A for lock-in averaging the acquired images with a first reference signal having the first frequency and a first phase to obtain amplitudes indicative of temperatures at a surface of the semiconductor device 230 and/or phase signals indicative of a depth location of the one or more defects in the semiconductor device 230. The obtained amplitudes and/or phase signals are induced by powering the semiconductor device 230 on and off.

The system 200, furthermore, comprises a second lock-in device 250B configured for lock-in averaging the acquired images with a second reference signal having the second frequency and a second phase to obtain a topography of the surface of the semiconductor device.

A system 200 according to the present invention is configured such that the first frequency is different from the second frequency and/or such that the first phase is different from the second phase.

In embodiments of the present invention the first signal generator 240A is synchronized with the first lock-in device 250A and the second signal generator 240B is synchronized with the second lock-in device 250B. This may be achieved by passing synchronization signals from the lock-in devices to the signal generators. Also the phase difference between the first and the second lock-in device may be set to a fixed value if the first frequency is equal to the second frequency. An exemplary implementation of the synchronization is illustrated by the dashed lines in FIG. 3. The invention is, however, not limited thereto.

In embodiments of the present invention the lock-in devices may be implemented digitally. The processing of the pixel values may be done by software on a processing device 250 (e.g. microcontroller, digital signal processor, field programmable gate array). Preferably the lock-in averaging is done in software, because each frame contains many signals (i.e. a signal per pixel). The signals that are coming from the camera are generally in digital format, so it is more convenient to implement the lock-in averaging digitally. In embodiments of the present invention the camera provides frames at a known frame rate to the processing device 250 (e.g. a control PC). The processing device is configured to keep track of the received frames and to send trigger pulses at the right time to the signal generators for turning on and off the semiconductor device or for turning on and off the irradiating device(s).

Alternatively, the first lock-in device and/or the second lock-in device may comprise analog circuits comprising a mixer for mixing a pixel signal with the respective first or second reference signal followed by a low pass filter.

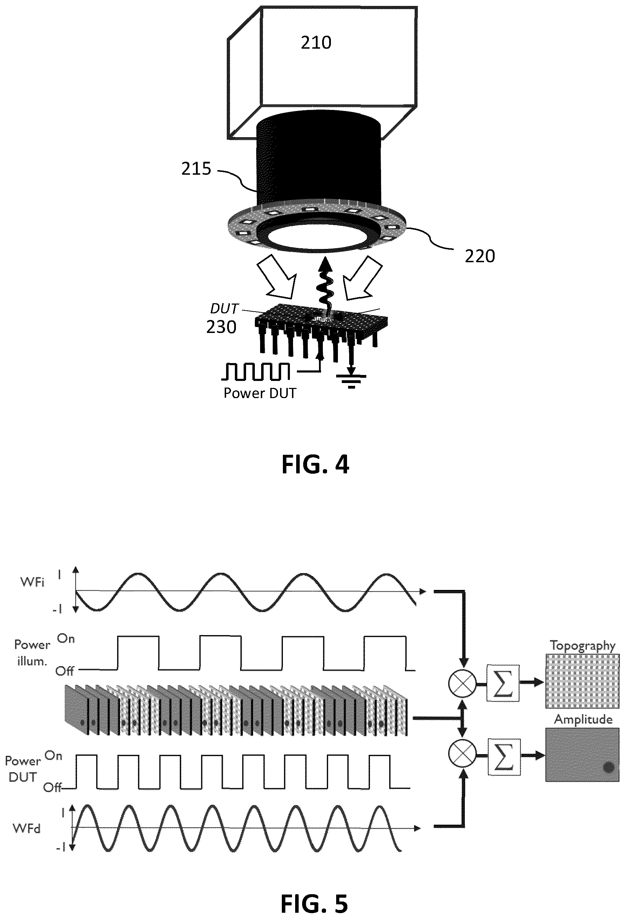

FIG. 4 show some basic elements of a system in accordance with embodiments of the present invention. In the figure a camera 210 which comprises a lens 215 is facing a semiconductor device 230.

In embodiments of the present invention the camera 210 may for example be an infrared camera (e.g. sensitive for wavelengths from 780 nm to 1 mm), for example a mid-wave infrared camera (e.g. sensitive for wavelengths from 3 µm to 5 µm).

The semiconductor device is mounted in a package and can be powered via bond pads.

In embodiments of the present the irradiating device 220 is a light source comprising a plurality of LEDs. The LEDs may for example be positioned around the lens 215 of the camera 210 as illustrated in FIG. 4. In embodiments of the present invention the LEDs may have a light emitting wavelength between 3 µm and 5 µm.

In embodiments of the present invention the irradiating device may be a laser. In embodiments of the present invention the laser wavelength is preferably longerthan 1100 nm (i.e. below the band gap energy of silicon), to avoid the generation of photoinduced carriers in the semiconductor device, to avoid the generation of photoinduced carriers in the semiconductor device, which may upset the performance of the tested device.

In embodiments of the present invention the irradiating device may be a heating device. In embodiments of the present invention the heating device preferably has a low thermal mass (e.g. compared to the thermal mass of the semiconductor device), to enable high frequency analysis. The thermal mass may for example be at least 0.025 J/K or even at least 0.010 J/K for a heater size of 20 mm × 20 mm. The device may for example be heated and subsequently cool off at a frequency of at least 5 Hz or even at least 1 Hz.

FIG. 5 schematically shows the different signals applied during a method in accordance with embodiments of the present invention. The device 230 of FIG. 4 may be powered 120 on and off at a first frequency. This is illustrated by the square wave (Power DUT) in FIG. 5. Meanwhile the device is illuminated regularly by turning the irradiating device 220 on and off at a second frequency. This is illustrated by the square wave (Power illum.) in FIG. 5. Meanwhile images are acquired 130 using the camera 210. In embodiments of the present invention the frame rate should at least be twice the highest frequency in use. So in this example it should be at least twice the highest frequency selected from the first or the second frequency. The acquired images are shown in the middle of FIG. 5. The dot in these images are present at a position with an increased temperature due to the presence of a defect resulting a heating of that spot when the semiconductor device is turned on. The images which have a raster are obtained when irradiating the semiconductor device. The two lock-in devices 250A and 250B are represented by the mixing signal and the summation signal. The first lock-in device is lock-in averaging the acquired images with a first reference signal which has the first frequency and a first phase. In this case the first reference signal is a sine wave WFd (Weighting Factors device) with the first frequency and a first phase. The first phase is selected such that the sine wave is in phase with heating of the defect element. In this example this phase is the same as the phase of the powering of the semiconductor device, but this is not necessarily the case, for example if there is a delay between the powering of the device and the heating of the defect element. The lock-in averaging 140A with the first reference signal may also result in a phase signal indicative of a depth location of the one or more defects in the semiconductor device. Generally it can be said that as the defect is located deeper in the device, a larger phase shift will be induced, since it takes more time for the heat wave to travel towards the surface of the semiconductor device. In this case the second reference signal is a sine wave with the second frequency and a second phase. The second phase is selected such that the sine wave is in phase with illumination/heating of the semiconductor device. In case of illumination the irradiating of the device and the sine wave WFi (Weighting Factors irradiation) are in phase. This is for example illustrated in FIG. 5. In case of heating there may be a delay between the irradiating of the device and the actual heating of the device. In that case the sine wave WFi, which is preferably in phase with the actual heating, may be delayed with respect to the irradiating of the device.

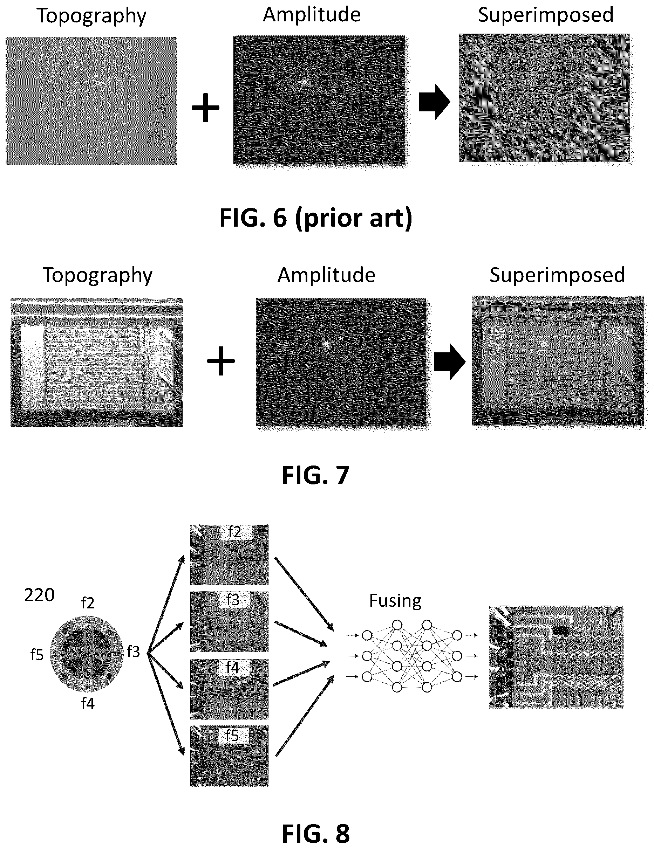

FIG. 6 shows the topography and amplitude images obtained using a conventional lock-in thermography method.

FIG. 7 shows the topography and amplitude images obtained using a method or device in accordance with embodiments of the present invention. It can be seen that simultaneously an image with an improved topographical contrast compared to FIG. 6 and an amplitude image for localizing a defect can be obtained. A method or a system in accordance with embodiments of the present invention may be adapted for superimposing both images. It is noted that besides an amplitude image also a phase image may be obtained with the lock-in averaging 140A.

In embodiments of the present invention the processing device 250 may additionally be programmed for localizing one or more defects on one or more locations in the semiconductor device by determining where the obtained amplitudes are larger than a predefined threshold.

In embodiments of the present invention the system 200 may comprise at least one additional signal generator and at least one additional irradiation device for irradiating the semiconductor device 230. In these embodiments the at least one additional signal generator is configured for switching on and off the at least one additional irradiating device with at least one additional frequency different from the first and the second frequency. In these embodiments the system, moreover, comprises at least one additional lock-in device configured for lock-in averaging the acquired images with the at least one additional reference signal having the at least one additional frequency to obtain a topography of the surface of the semiconductor device. The lock-in devices may be implemented digitally for example by programming a processing device. In the description reference is made to one processing device. It is noted that the functionality of the processing device may be distributed over different processing modules. The processing device may additionally be programmed for fusing images from the different lock-in devices. Image fusion may be done in software, and can leverage image processing algorithm models.

An example of a plurality additional irradiation devices is illustrated in FIG. 8. Besides the irradiation device 220 which is switched on and off at the second frequency f2 it comprises three additional irradiation devices which are switched on and off at three different frequencies f3, f4, and f5. After the lock-in averaging, four topographic images are obtained. These can be merged by a processing device 250 to obtain a merged topographic image.

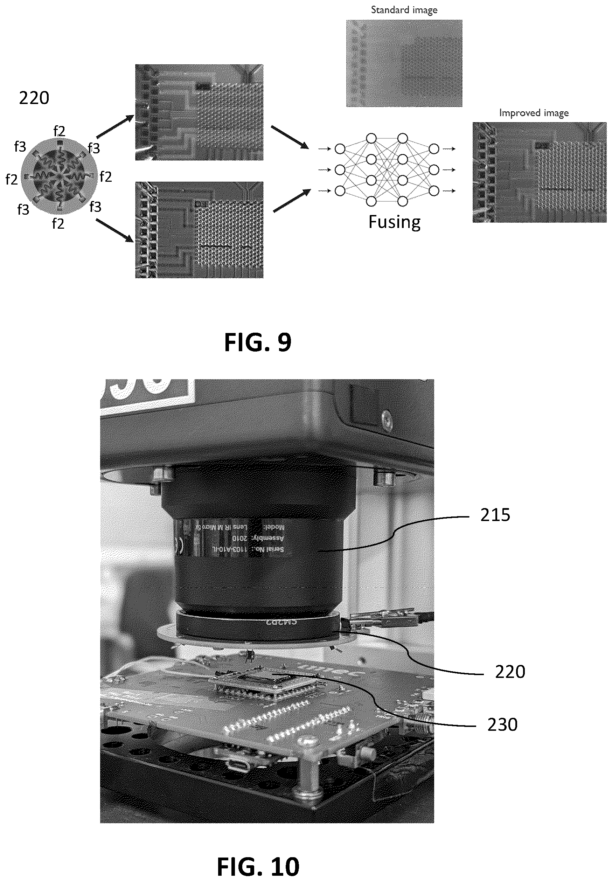

In embodiments of the present invention one irradiating device 220 may comprise IR-LEDs and may be switched on and off at the second frequency f2 and an additional irradiating device 220 may comprise lasers for heating the semiconductor device. It may be switched on and off at a third frequency f3 different from the first and second frequency. An example thereof is illustrated in FIG. 9. The top left image is obtained after lock-in averaging with a reference signal with the second frequency thus obtaining a topographic image with IR-LED illumination. The bottom left image is obtained after lock-in averaging with a reference signal with the third frequency thus obtaining a topographic image with laser heating. After image fusion the image at the right is obtained. It can be seen that this image has a better topographical contrast than the top image which is a standard integrated topography image.

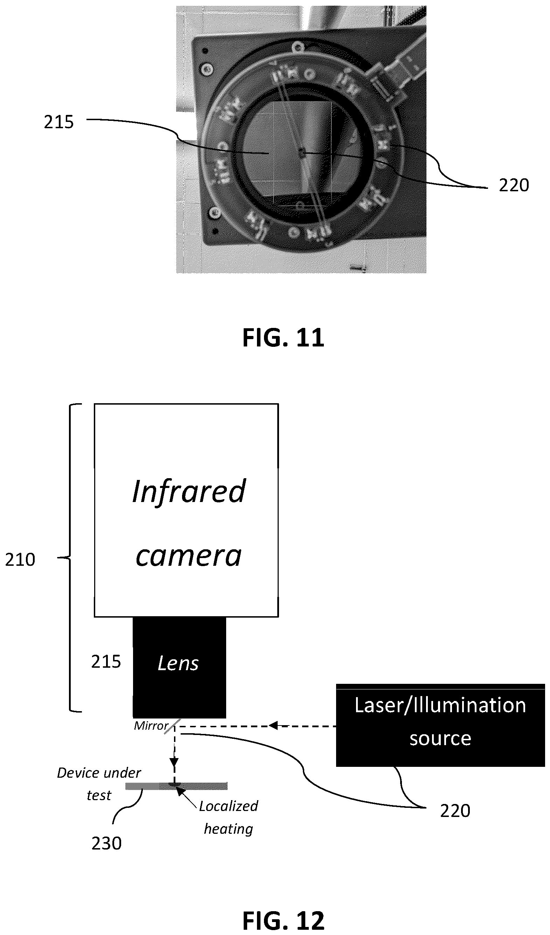

FIG. 10 shows an irradiating device 220 mounted on a lens 215 of a camera. The lens and irradiating device are mounted in front of a semiconductor device 230. The bottom view of the irradiating device 220 and lens 215 is shown in FIG. 11. The irradiating device is a ring light comprising a plurality of LEDs. In this exemplary irradiating device an LED is also positioned at the center of the lens for coaxial illumination. In embodiments of the present invention this LED may also be slightly offcentered. The offset may for example be selected in function of the image field of view. The offset may for example be in the order of 1 mm to 5 mm.

In embodiments of the present invention a mirror may be positioned at the center of the lens 215 and the mirror and a laser/illumination source may be positioned such that light irradiated on the mirror is reflected on the semiconductor device 230. The semiconductor device may be subjected to localized heating wherein only that region of the semiconductor device is heated that is within the camera's field of view.

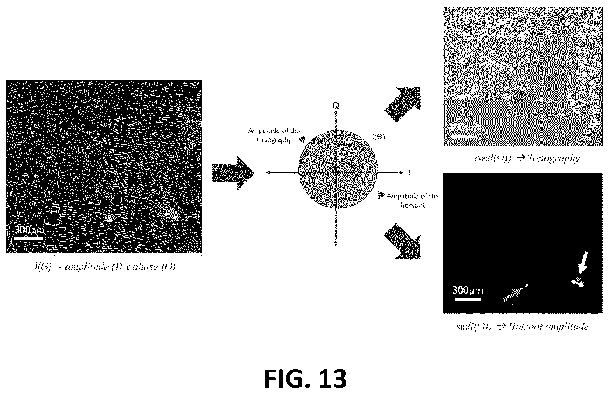

In embodiments of the present invention the first frequency at which the semiconductor device is switched on and off may be equal to the second frequency at which the irradiating device is switched on and off, and the first phase is different from the second phase. In this technique the on and off switching of the semiconductor device and the on and off switching of the irradiating device has a phase difference of 90°. An example of obtained images is shown in FIG. 13. The left image shows an image obtained using the camera. To activate the irradiating device with phase-shifted voltage bias, a switch comprising metal oxide semiconductor field effect transistors may be used.

Lock-in averaging is applied on the acquired images using a reference signal with the first phase to obtain an amplitude image resulting from the on and off switching of the semiconductor device from which the hotspots can be derived (bottom right image of FIG. 13). Lock-in averaging is also applied on the acquired images using a reference signal with the second phase to obtain a amplitude image of the topography of the semiconductor device (top right image of FIG. 13).

In embodiments of the present invention amplitude (I) and phase (θ) images resulting from the lock-in averaging may be multiplied by the processing device to get complex data I(θ). This may be further evaluated by performing trigonometric analysis and individual images of low-noise lock-in topography and hotspot amplitude may be extracted.

It is an advantage of embodiments of the present invention that the measurement time can be reduced and the same throughput as classical thermography can be achieved while obtaining an topography image with improved contrast. It is, moreover, advantageous that the thermal budget of the failure analysis process is reduced compared to heat-assisted lock-in thermography.

Since, in embodiments of the present invention, the topography is obtained from the lock-in measurement, the data is averaged over several periods, and hence is less sensitive to input noise.

## Claims

1. A method (100) for localizing one or more defects in a semiconductor device, the method comprising:
- switching (110) the semiconductor device on and off at a first frequency,
- meanwhile switching (120) an irradiating device, for irradiating the semiconductor device, on and off at a second frequency,
- and meanwhile acquiring (130) images of the semiconductor device using a camera;
- lock-in averaging (140A) the acquired images with a first reference signal having the first frequency and a first phase to obtain amplitudes indicative of temperatures at a surface of the semiconductor device and/or phase signals indicative of a depth location of the one or more defects in the semiconductor device which are induced by switching (110) the semiconductor device on and off,
- lock-in averaging (140B) of the acquired images with a second reference signal having the second frequency and a second phase to obtain a topography of the surface of the semiconductor device,
wherein the first frequency is different from the second frequency and/or the first phase is different from the second phase.

2. A method (100) according to claim 1, wherein the first frequency is equal to the second frequency and wherein the first phase is shifted over 90° with respect to the second phase.

3. A method (100) according to claim 1, wherein the first frequency is different from the second frequency.

4. A method (100) according to any of the previous claims, the method comprising localizing one or more defects on one or more locations by determining where the obtained amplitudes are larger than a predefined threshold.

5. A system (200) for localizing one or more defects in a semiconductor device (230), the system (200) comprising:
- a first signal generator (240A) for powering the semiconductor device on and off at a first frequency,
- a second signal generator (240B) and an irradiating device (220) for irradiating the semiconductor device (230) wherein the second signal generator (140B) is configured for switching on and off the irradiating device at a second frequency,
- a camera (210) configured for acquiring (130) images of the semiconductor device,
- a first lock-in device (250A) configured for lock-in averaging the acquired images with a first reference signal having the first frequency and a first phase to obtain amplitudes indicative of temperatures at a surface of the semiconductor device (230) and/or phase signals indicative of a depth location of the one or more defects in the semiconductor device which are induced by powering the semiconductor device on and off,
- a second lock-in device (250B) configured for lock-in averaging the acquired images with a second reference signal having the second frequency and a second phase to obtain a topography of the surface of the semiconductor device,
wherein the first frequency is different from the second frequency and/or the first phase is different from the second phase.

6. A system (200) according to claim 5, wherein the camera (210) is an infrared camera.

7. A system (200) according to any of the claims 5 or 6 wherein the first lock-in device (250A) and/or the second lock-in device (250B) are implemented digitally.

8. A system (200) according to any of the claims 5 or 6 wherein the first lock-in device (250A) and/or the second lock-in device (250B) comprise analog circuits comprising a mixer for mixing with the respective first or second reference signal followed by a low pass filter.

9. A system (200) according to any of the claims 5 to 8, wherein the irradiating device (220) is a light source comprising a plurality of LEDs or lasers.

10. A system (200) according to claim 9, wherein the LEDs or lasers are positioned in a ring around the camera (210).

11. A system (200) according to claim 10, wherein one of the LEDs or lasers is positioned substantially in a center of the ring.

12. A system (200) according to any of the claims 5 to 8 wherein the irradiating device (220) is a heating device.

13. A system (200) according to any of the claims 5 to 12, the system comprising
- at least one additional signal generator and at least one additional irradiation device (220) for irradiating the semiconductor device wherein the at least one additional signal generator is configured for switching on and off the at least one additional irradiating device (220) with at least one additional frequency different from the first and the second frequency,
- and at least one additional lock-in device configured for lock-in averaging the acquired images with the at least one additional reference signal having the at least one additional frequency to obtain a topography of the surface of the semiconductor device.

14. A system (200) according to any of the claims 5 to 13, the system comprising a processing device programmed for fusing images from the different lock-in devices.

15. A system (200) according to claim 14, wherein the processing device is additionally programmed for localizing one or more defects on one or more locations in the semiconductor device by determining where the obtained amplitudes are larger than a predefined threshold.
